# EUROPEAN PATENT SPECIFICATION

(11) **EP 1 843 950 B1**
(45) Date of publication and mention of the grant of the patent: **14.04.2010**
(21) Application number: 05823599.5
(22) Date of filing: 28.12.2005
(51) Int. Cl.: B65D 73/00

(54) **PACKAGE FOR PHARMACEUTICAL, MEDICAL OR SIMILAR PRODUCTS, PARTICULARLY PESTICIDES OR PLANT PROTECTION PRODUCTS**
VERPACKUNG FÜR PHARMAZEUTISCHE, MEDIZINISCHE ODER ÄHNLICHE PRODUKTE, BESONDERS PESTIZIDE ODER PFLANZENSCHUTZPRODUKTE
EMBALLAGE DE PRODUITS PHARMACEUTIQUES, DE PRODUITS MÉDICAUX OU DE PRODUITS SIMILAIRES, EN PARTICULIER DE PRODUITS PESTICIDES OU PHYTOSANITAIRES

(30) Priority: 30.12.2004 IT MO20040351
(43) Date of publication of application: 17.10.2007
(73) Proprietor: Bayer CropScience AG, 40789 Monheim (DE)
(72) Inventor: FONTANA, Antonio, 41012 Carpi (IT)
(74) Representative: Albiger, Jonas
(86) International application number: PCT/EP2005/057194
(87) International publication number: WO 2006/070003

(56) References cited:
- EP-A- 0 325 122
- WO-A-2005/042371
- DE-A1- 2 056 245
- US-A- 3 370 733
- US-A- 4 512 475

## Description

### Technical Field

The present invention relates to a package for pharmaceutical products, medical products or the like, particularly pesticides or plant protection products.

### Background Art

In the agricultural field, it is known to use pesticides or plant protection products, i.e., products used essentially to protect plants against diseases (fungicides, insecticides, limacides, repellents and the like), to control the physiological functions of plants (plant growth regulators), to eliminate unwanted plants (herbicides), to eliminate parts of plants or restrain them or avoid their unwanted growth.

Usually, these products are marketed in sealed packages.

Known packages include those which comprise a container of the product, such as for example a bottle, a tube or the like, which is closed within an external protective enclosure such as for example a sachet, a case or the like, which can be removed at the time of use.

These packages are used particularly for containers of the single-dose type.

Further, known packages are provided with a label which bears the set of prescriptions for the individual product: name, type, formulation and composition of the product; crop, doses, methods, field and period of use; symbols of toxicity and danger; phytotoxicity; latency or safety periods; storage rules; safety rules; risk descriptions; precautionary recommendations; information for the physician in case of intoxication, irritation or poisonings and others.

Usually, the label is arranged on the outer enclosure, the one which is removed when the product is used, in order to extract the container from it, and is put to one side or even discarded; this occurs particularly in the case of single-dose containers, the limited external surface of which is insufficient to contain all the necessary prescribed indications.

These know packages are not free from drawbacks, including the fact that they do not allow operators assigned to using the pharmaceutical, medical or similar products, particularly pesticides or plant protection products, to have constantly available for immediate reference the indications prescribed for them.

Operators, after inspecting the label placed on the external enclosure, in fact open such enclosure in order to extract the container of the product from it, and put the enclosure to one side and/or discard it, handling only the container during the steps for use of the product.

Accordingly, the label is put to one side and/or discarded together with the external enclosure.

Since the information prescribed for the products being used are not always constantly at their disposal, operators may use the products inappropriately and excessively, with consequent possible environmental damage and imbalances, risks for their own physical safety and for the safety of others, such as for example risks of irritations, intoxications or poisonings, and risks of contaminations of the foods derived from plants treated incorrectly.

Another drawback of known packages, particularly packages which comprise single-dose containers, is that they do not allow easy and safe handling of the containers, the limited dimensions of which make it very difficult to squeeze them in order to dispense the products contained therein.

The WO 2005/042371 A1 discloses a package according to the preamble of claim 1.

The DE 2 056 245 discloses a package for a product comprising a container with an outlet, a flat element with a receptacle for containing the container and means for connecting said container and said flat element. A removable closure element is associated with the outlet. In order to remove the closure element and to open the outlet, respectively, it is necessary to separate the container from the flat element. Particularly when using the container several times the separated flat element can be lost and thereby important information printed or the like on the flat element can also be lost.

### Disclosure of the Invention

The aim of the present invention is to eliminate the above-mentioned drawbacks of known packages, by providing a package for pharmaceutical, medical or similar products, particularly pesticides or plant protection products, which allows operators assigned to the use of the products, particularly pesticides and plant protection products, to have constantly at their disposal for immediate reference the indications prescribed for the products, even in the case of single-dose packages.

Within this aim, an object of the present invention is to provide a package which allows to facilitate the correct use of these products and thus reduce the risks of environmental imbalances and damage, risks for the physical safety of the operators and of other individuals, and risks of contaminations of the foods derived from the treated plants.

Another object of the present invention is to provide a package which is easy to handle even if it is of the single-dose type.

A further object of the present invention is to provide a package which is simple, relatively easy to provide in practice, safe in use, effective in operation, and has a relatively low cost.

This aim and these and other obj ects that will become better apparent hereinafter are achieved by the present package for pharmaceutical, medical or similar products, particularly pesticides or plant protection products, characterized in that it comprises a substantially flat element for supporting indications prescribed for a pharmaceutical, medical or similar product, particularly a pesticide or plant protection product, a receptacle for containing a container of said product which is formed in said substantially flat element, and first means for connecting said container and said substantially flat element.

### Brief description of the Drawings

Further characteristics and advantages of the present invention will become better apparent from the following detailed description of a preferred but not exclusive embodiment of a package for pharmaceutical, medical or similar products, particularly pesticides or plant protection products, illustrated by way of non-limiting example in the accompanying drawings, wherein:
Figure 1 is a schematic exploded view of a package according to the invention;
Figure 2 is a schematic perspective view of a package according to the invention in the closure configuration;
Figure 3 is a schematic perspective view of a package according to the invention in the open configuration;
Figure 4 is a schematic perspective view of plurality of packages according to the invention, stored in the closure configuration.

### Ways of carrying out the Invention

With reference to the figures, the reference numeral 1 generally designates a package for pharmaceutical, medical or similar products, particularly pesticides or plant protection products.

The package 1 comprises a substantially flat element, which is constituted for example by a panel 2 suitable to support a set of prescriptions for a product, schematically designated by the outlines T, and in which there is a first receptacle 3 for accommodating a container 4 of the product, first means 5 for connecting the container 4 and the panel 2 being provided.

The container 4 can be in particular of the single-dose type and can be shaped like a bottle, tube or the like.

The container 4 can comprise for example a body 6, which is closed on the bottom 7 and continues with a neck 8, at the top end of which a product dispensing outlet 9 is formed.

A removable closure element 10, such as for example a stopper, a cap or the like, is associated with the dispensing outlet 9 and can be rigidly coupled to the dispensing outlet 9 along a weakened and breakable band.

The package 1 further comprises a tab 11, which is associated with the panel 2 and is substantially coplanar thereto by way of coupling means 12 of the temporary and removable type.

The tab 11 supports the closure element 10, and second means 13 for connecting the closure element 10 and the tab 11 are provided. A second receptacle 14 for accommodating the closure element 10 is formed in the tab 11.

The panel 2 is shaped for example like an elongated rectangle, at one end of which the first receptacle 3 is formed, and continues, at the opposite end, with a tab, on one or both faces of which all the prescriptions for the product contained in the container 4 are provided, such tab also acting as a grip element for the operator.

The tab 11 is constituted for example by a portion of the panel 2, which is formed at the end thereof where the first receptacle 3 is provided, while the coupling means 12 are constituted for example by a weakened region 15, which delimits said portion and allows to remove the tab 11 by tearing and therefore remove the closure element 10 rigidly coupled thereto.

The first receptacle 3 is constituted by an opening, the perimeter of which substantially and at least partially reproduces the profile of the container 4, particularly of the body 6 and of the neck 8.

Likewise, the second receptacle 14 is constituted by an opening, the perimeter of which substantially and at least partially reproduces the profile of the closure element 10.

Corresponding wings 16 and 17 are formed at the sides of the container 4 and at the top end of the closure element 10, and the first connecting means 5 and the second connecting means 13 are provided respectively therein, such wings being suitable to be superimposed respectively on the panel 2 and on the tab 11.

The first connecting means 5 and the second connecting means 13 are of the permanent type.

The first connecting means 5 can comprise for example first pins 18, which protrude from the wings 16 of the container 4 and can be inserted with interference in corresponding first holes 19 formed in the panel 2 laterally with respect to the first receptacle 3.

The second connecting means 13 comprise second pins 20, which protrude from the wing 17 and can be inserted with interference in corresponding second holes 21 formed in the tab 11 at the sides of the second receptacle 14.

Conveniently, the coupling between the first pins 18 and the first holes 19 and between the second pins 20 and the second holes 21 is conical; further, the first pins 18 and the second pins 20 are additionally fixed by hot riveting.

However, alternative embodiments of the first connecting means 5 and of the second connecting means 13 are not excluded and, for example, might comprise rivets or welds, obtained for example by means of ultrasound or by thermal bonding, adhesive bonding or the like formed respectively between the body 4 and the panel 2 and between the closure element 10 and the tab 11.

Conveniently, the panel 2 and/or the tab 11 are made of a substantially rigid material such as for example card or cardboard, cardboard bonded with plastic material, polymeric material (for example polypropylene), or the like; they are formed monolithically, for example by scoring and cutting by means of die-cutters.

Finally, the package 1 comprises means for engagement with a supporting element, such as for example a slot 22 for the insertion of a hook 23.

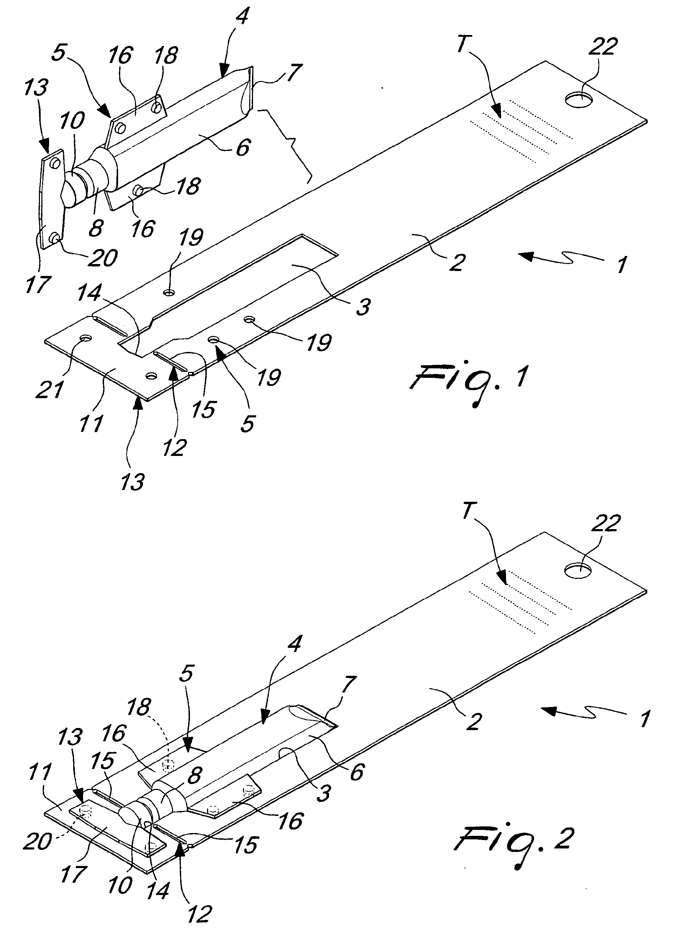

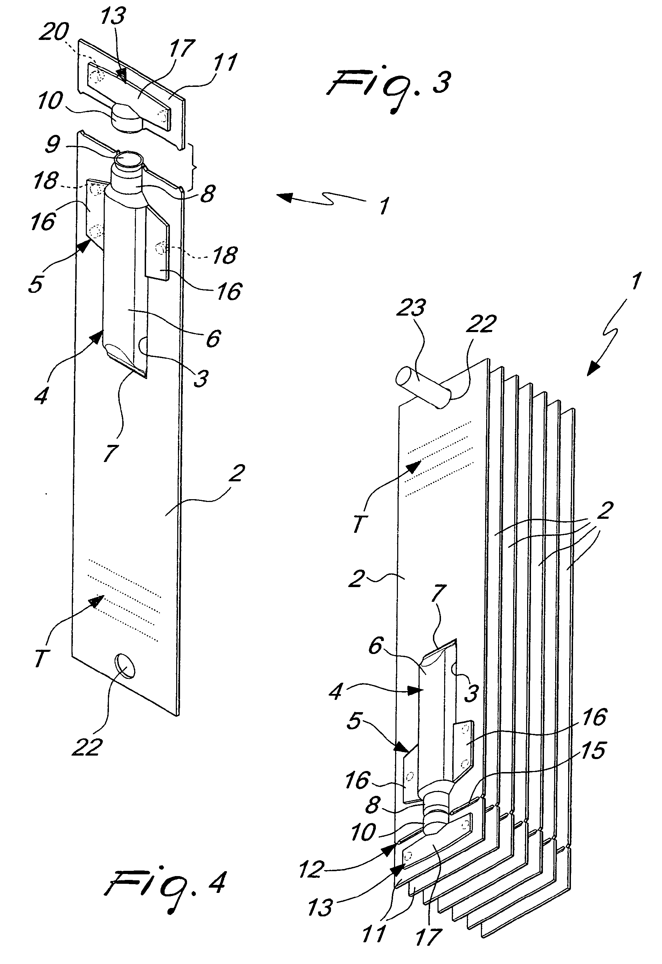

The operation of the invention is as follows: the package 1 in the closed configuration (Figures 2 and 4) has a tab 11 which is monolithically coupled to the panel 2; the body 4 and the closure element 10 are mutually rigidly associated temporarily and are respectively accommodated within the first receptacle 3 and the second receptacle 14 and are permanently coupled respectively to the panel 2 and the tab 11 by virtue of the first connecting means 5 and the second connecting means 13.

In this configuration, the package 1 can be stored easily, for example by hanging it on the supporting hook 23.

At the time of use, it is sufficient to apply to the tab 11 a twisting/tearing action such as to tear the weakened region 15 in order to disengage the tab 11 from the panel 2 and therefore remove the closure element 10 rigidly coupled thereto from the container 4, opening its dispensing outlet 9 (Figure 3).
The indications (outlines T) provided on the panel 2 are therefore constantly available for reference on the part of the operator who is handling the container 4 throughout the steps of the use of the product contained therein, since the container 4 is coupled permanently to the panel 2.

Moreover, the elongated configuration of the panel 2 facilitates the grip, handling and squeezing of the container 4 in order to dispense the product contained therein, particularly if it is small, such as for example in the case of single-dose containers.

In practice it has been found that the described invention achieves the proposed aim and objects.

The invention thus conceived is susceptible of numerous modifications and variations, all of which are within the scope of the appended claims.

All the details may further be replaced with other technically equivalent ones.

In practice, the materials used, as well as the shapes and the dimensions, may be any according to requirements without thereby abandoning the scope of the protection of the appended claims.

## Claims

1. A package (1) for pharmaceutical, medical or similar products, particularly pesticides or plant protection products, comprising a substantially flat element (2) for supporting indications prescribed for a pharmaceutical, medical or similar product, particularly a pesticide or plant protection product, a first receptacle (3) for containing a container (4) of said product which is formed in said substantially flat element (2), and first means (5) for connecting said container and said substantially flat element (2), whereas said container (4) comprises an outlet (9) for dispensing said product, with which a removable closure element (10) is associated, **characterized in that** the package (1) comprises a tab (11) which is associated with said substantially flat element 82) by way of temporary and removable coupling means (12) and supports said closure element (10), second means (13) for connecting said closure element (10) and said tab (11) being provided, whereas said container (4) comprises at least one wing (16), in which there are said first connecting means (5), said wing (16) being suitable to be superimposed on said substantially flat element (2).

2. The package (1) according to claim 1, **characterized in that** said first connecting means (5) are of the permanent type.

3. The package (1) according to one or more of the preceding claims, **characterized in that** said second connecting means (13) are of the permanent type.

4. The package (1) according to one ore more of the preceding claims, **characterized in that** said tab (11) and said substantially flat element (2) are mutually substantially coplanar.

5. The package (1) according to one ore more of the preceding claims, **characterized in that** said tab (11) comprises a second receptacle (14) for accomodating said closure element (10).

6. The package (1) according to one or more of the preceding claims, **characterized in that** said substantially flat element (2) comprises a panel provided with at least one face which is suitable to support said indications

7. The package (1) according to one ore more of the preceding claims, **characterized in that** said substantially flat element (2) is shaped substantially like an elongated rectangle, at one end of which said first receptacle (3) is formed, said rectangle being extended at its opposite end into a tab which is suitable to support said indications.

8. The package (1) according to one or more of the preceding claims, **characterized in that** said first receptacle (3) comprises an opening, the perimeter of which substantially and at least partially reproduces the profile of said container (4).

9. The package (1) according to one or more of the preceding claims, **characterized in that** said second receptacle (14) comprises an opening, the perimeter of which substantially and at least partially reproduces the profile of said closure element (10).

10. The package (1) according to one or more of the preceding claims, **characterized in that** said tab (11) comprises an end portion of said substantially flat element (2) which is formed proximate to said first receptacle (3), said temporary and removable coupling elements (12) being formed by a weakened region of said substantially flat element (2) which delimits said portion.

11. The package (1) according to one or more of the preceding claims, **characterized in that** said substantially flat element (2) and/or said tab (11) are made of substantially rigid material such as cardboard, card, cardboard bonded with plastic material, polymeric material, or the like.

12. The package (1) according to one or more of the preceding claims, **characterized in that** said first connecting means (5) comprise at least one first pin, which is formed in said container 84) or in said substantially flat element (2) and can be inserted with interference in a corresponding first hole which is formed respectively in said substantially flat element (2) or in said container (4).

13. The package (1) according to one ore more of the preceding claims, **characterized in that** said second connecting means (13) comprise at least one second pin, which is formed in said closure element (10) or in said tab (11) and can be inserted with interference in a corresponding second hole which is formed respectively in said tab (14) or in said closure element (10).

14. The package (1) according to one or more of the preceding claims, **characterized in that** said closure element (10) comprises at least one wing (17) in which said second connection means (13) are provided and which is suitable to be superimposed on said tab (11).

15. The package (1) according to one or more of the preceding claims, **characterized in that** at least one among said first connecting means (5) and said second connecting means (13) comprises rivets, ultrasound welds, thermal bonding welds, or adhesive bondings formed respectively between said container (4) and said substantially flat element (2) and between said closure element (10) and said tab (11).

16. The package (1) according to one or more of the preceding claims, **characterized in that** said container (4) comprises a containment body which is closed on the bottom and is extended with a neck at the top end of which said dispensing outlet (9) is formed.

17. The package (1) according to one or more of the preceding claims, **characterized in that** said substantially flat element (2) comprises means for engagement with a supporting element.

18. The package (1) according to one or more of the preceding claim, **characterized in that** engagement means comprise a slot.

## Patentansprüche

1. Verpackung (1) für pharmazeutische, medizinische oder ähnliche Produkte, besonders Pestizide oder Pflanzenschutzprodukte, umfassend ein im Wesentlichen flaches Element (2) als Träger von für ein pharmazeutisches, medizinisches oder ähnliches Produkt, besonders für ein Pestizid oder ein Pflanzenschutzprodukt, vorgeschriebenen Angaben, eine erste Aufnahme (3) zur Aufnahme eines Behälters (4) des Produktes, welche in dem im Wesentlichen flachen Element (2) ausgebildet ist, und erste Mittel (5) zur Verbindung von dem Behälter (4) und dem im Wesentlichen flachen Element (2), wobei der Behälter (4) einen Auslass (9) zur Abgabe des Produkts umfasst, mit welchem ein lösbares Verschlusselement (10) verbunden ist, **dadurch gekennzeichnet, dass** die Verpackung eine Lasche (11) umfasst, welche mittels temporärer und lösbarer Verbindungsmittel (12) mit dem im Wesentlichen flachen Element (2) verbunden ist und welche das Verschlusselement (10) trägt, wobei zweite Mittel (13) zur Verbindung von dem Verschlusselement (10) und der Lasche (11) vorgesehen sind, und wobei der Behälter (4) wenigstens einen Flügel (16) umfasst, auf welchem sich die ersten Verbindungsmittel (5) befinden, wobei der Flügel (16) geeignet ist, auf das im Wesentlichen flache Element (2) aufgebracht zu werden.

2. Verpackung (1) nach Anspruch 1, **dadurch gekennzeichnet, dass** die ersten Verbindungsmittel (5) nicht lösbar sind.

3. Verpackung (1) nach einem oder mehreren der vorangehenden Ansprüche, **dadurch gekennzeichnet, dass** die zweiten Verbindungsmittel (13) nicht lösbar sind.

4. Verpackung (1) nach einem oder mehreren der vorangehenden Ansprüche, **dadurch gekennzeichnet, dass** die Lasche (11) und das im Wesentlichen flache Element (2) im Wesentlichen wechselseitig koplanar sind.

5. Verpackung (1) nach einem oder mehreren der vorangehenden Ansprüche, **dadurch gekennzeichnet, dass** die Lasche (11) eine zweite Aufnahme (14) zur Aufnahme des Verschlusselements (10) umfasst.

6. Verpackung (1) nach einem oder mehreren der vorangehenden Ansprüche, **dadurch gekennzeichnet, dass** das im Wesentlichen flache Element (2) ein Feld umfasst, welches mit wenigstens einer Seite versehen ist, die geeignet ist, die Angaben zu tragen.

7. Verpackung (1) nach einem oder mehreren der vorangehenden Ansprüche, **dadurch gekennzeichnet, dass** das im Wesentlichen flache Element (2) im Wesentlichen wie ein gestrecktes Rechteck geformt ist, an dessen einem Ende die erste Aufnahme (3) ausgebildet ist, wobei das Rechteck sich an seinem gegenüberliegenden Ende in eine Lasche erstreckt, die geeignet ist, die Angaben zu tragen.

8. Verpackung (1) nach einem oder mehreren der vorangehenden Ansprüche, **dadurch gekennzeichnet, dass** die erste Aufnahme (3) eine Öffnung umfasst, deren Umriss im Wesentlichen und zumindest teilweise das Profil des Behälters (4) abbildet.

9. Verpackung (1) nach einem oder mehreren der vorangehenden Ansprüche, **dadurch gekennzeichnet, dass** die zweite Aufnahme (14) eine Öffnung umfasst, deren Umriss im Wesentlichen und zumindest teilweise das Profil des Verschlusselements (10) abbildet.

10. Verpackung (1) nach einem oder mehreren der vorangehenden Ansprüche, **dadurch gekennzeichnet, dass** die Lasche (11) einen Endbereich des im Wesentlichen flachen Elements (2) umfasst, welcher benachbart zu der ersten Aufnahme (3) ausgebildet ist, wobei die temporären und lösbaren Verbindungsmittel (12) durch eine verdünnte Zone in dem im Wesentlichen flachen Element (2) gebildet sind, welche diesen Bereich begrenzt.

11. Verpackung (1) nach einem oder mehreren der vorangehenden Ansprüche, **dadurch gekennzeichnet, dass** das im Wesentlichen flache Element (2) und/oder die Lasche (11) aus einem im Wesentlichen steifen Material gefertigt sind, wie Pappe, Karton, Pappe verbunden mit Kunststoffmaterial, Polymermaterial oder ähnlichem.

12. Verpackung (1) nach einem oder mehreren der vorangehenden Ansprüche, **dadurch gekennzeichnet, dass** die ersten Verbindungsmittel (5) wenigstens einen ersten Pin umfassen, der in dem Behälter (4) oder in dem im Wesentlichen flachen Element (2) ausgebildet ist und welcher durch Pressen in ein zugehöriges erstes Loch eingeführt werden kann, welches in dem im Wesentlichen flachen Element (2) bzw. in dem Behälter (4) ausgebildet ist.

13. Verpackung (1) nach einem oder mehreren der vorangehenden Ansprüche, **dadurch gekennzeichnet, dass** die zweiten Verbindungsmittel (13) wenigstens einen zweiten Pin umfassen, der in dem Verschlusselement (10) oder in der Lasche (11) ausgebildet ist und welcher durch Pressen in ein zugehöriges zweites Loch eingeführt werden kann, welches in der Lasche (11) bzw. in dem Verschlusselement (10) ausgebildet ist.

14. Verpackung (1) nach einem oder mehreren der vorangehenden Ansprüche, **dadurch gekennzeichnet, dass** das Verschlusselement (10) wenigstens einen Flügel (17) umfasst, auf welchem die zweiten Verbindungsmittel (13) vorgesehen sind und welcher geeignet ist, auf die Lasche (11) aufgebracht zu werden.

15. Verpackung (1) nach einem oder mehreren der vorangehenden Ansprüche, **dadurch gekennzeichnet, dass** wenigstens eines von den ersten Verbindungsmitteln (5) und den zweiten Verbindungsmitteln (13) Nieten, Ultraschall-Schweißverbindungen, thermische Schweißverbindungen oder Klebeverbindungen umfasst, welche zwischen dem Behälter (4) und dem im Wesentlichen flachen Element (2) bzw. zwischen dem Verschlusselement (10) und der Lasche (11) ausgebildet sind.

16. Verpackung (1) nach einem oder mehreren der vorangehenden Ansprüche, **dadurch gekennzeichnet, dass** der Behälter (4) einen Aufnahmekörper umfasst, welcher am unteren Ende geschlossen ist und am oberen Ende mit einem Hals verlängert ist, von dem der Abgabeauslass (9) gebildet wird.

17. Verpackung (1) nach einem oder mehreren der vorangehenden Ansprüche, **dadurch gekennzeichnet, dass** das im Wesentlichen flache Element (2) Mittel für das Eingreifen eines Trägerelements umfasst.

18. Verpackung (1) nach einem oder mehreren der vorangehenden Ansprüche, **dadurch gekennzeichnet, dass** Eingriffsmittel eine Aussparung umfassen.

## Revendications

1. Emballage (1) pour produits pharmaceutiques, médicaux ou autres, en particulier des pesticides ou produits pour la protection des plantes, comprenant un élément substantiellement plat (2) comme support pour des indications prescrites pour un produit pharmaceutique, médical ou autre, en particulier un pesticide ou un produit pour la protection des plantes, un premier réceptacle (3) pour l'accueil d'un conteneur (4) dudit produit, qui est formé dans ledit élément substantiellement plat (2), et des premiers moyens (5) pour la connexion dudit conteneur avec ledit élément substantiellement plat (2), tandis que ledit conteneur (4) comprend une sortie (9) pour la distribution dudit produit, à laquelle est associé un élément de fermeture amovible (10), **caractérisé en ce que** l'emballage (1) comprend une languette (11) associée audit élément substantiellement plat (2) à l'aide d'un moyen d'accouplement (12) amovible et temporaire et supportant ledit élément de fermeture (10), des deuxièmes moyens (13) pour la connexion dudit élément de fermeture (10) avec ladite languette (11) étant prévus, tandis que ledit conteneur (4) comprend au moins une aile (16), dans laquelle se trouvent lesdits premiers moyens de connexion (5), ladite aile (16) étant adaptée pour être superposée sur ledit élément substantiellement plat (2).

2. Emballage (1) selon la revendication 1, **caractérisé en ce que** lesdits premiers moyens de connexion (5) sont du type permanent.

3. Emballage (1) selon l'une ou plusieurs des revendications précédentes, **caractérisé en ce que** lesdits deuxièmes moyens de connexion (13) sont du type permanent.

4. Emballage (1) selon l'une ou plusieurs des revendications précédentes, **caractérisé en ce que** ladite languette (11) et ledit élément substantiellement plat (2) sont substantiellement mutuellement coplanaires.

5. Emballage (1) selon l'une ou plusieurs des revendications précédentes, **caractérisé en ce que** ladite languette (11) comprend un deuxième réceptacle (14) pour le logement dudit élément de fermeture (10).

6. Emballage (1) selon l'une ou plusieurs des revendications précédentes, **caractérisé en ce que** ledit élément substantiellement plat (2) comprend un panneau pourvu d'au moins une face adaptée pour porter lesdites indications.

7. Emballage (1) selon l'une ou plusieurs des revendications précédentes, **caractérisé en ce que** ledit élément substantiellement plat (2) est formé substantiellement comme un rectangle allongé, à l'extrémité duquel est formé ledit premier réceptacle (3), ledit rectangle se prolongeant à son extrémité opposée en une languette adaptée pour porter lesdites indications.

8. Emballage (1) selon l'une ou plusieurs des revendications précédentes, **caractérisé en ce que** ledit premier réceptacle (3) comprend une ouverture, dont le périmètre reproduit substantiellement et au moins partiellement le profil dudit conteneur (4).

9. Emballage (1) selon l'une ou plusieurs des revendications précédentes, **caractérisé en ce que** ledit deuxième réceptacle (14) comprend une ouverture, dont le périmètre reproduit substantiellement et au moins partiellement le profil dudit élément de fermeture (10).

10. Emballage (1) selon l'une ou plusieurs des revendications précédentes, **caractérisé en ce que** ladite languette (11) comprend une portion terminale dudit élément substantiellement plat (2), formée à proximité dudit premier réceptacle (3), lesdits éléments d'accouplement temporaires et amovibles (12) étant formés par une région d'affaiblissement dudit élément substantiellement plat (2), délimitant ladite portion

11. Emballage (1) selon l'une ou plusieurs des revendications précédentes, **caractérisé en ce que** ledit élément substantiellement plat (2) et/ou ladite languette (11) est/sont constitué(s) d'un matériau substantiellement rigide, tel que du carton, du papier cartonné, du carton revêtu de matière plastique, un matériau polymérique ou autre.

12. Emballage (1) selon l'une ou plusieurs des revendications précédentes, **caractérisé en ce que** lesdits premiers éléments de connexion (5) comprennent au moins une première barrette, formée dans ledit conteneur (4) ou dans ledit élément substantiellement plat (2) et pouvant être insérée avec interférence dans un premier trou correspondant, qui est formé respectivement dans ledit élément substantiellement plat (2) ou dans ledit conteneur (4).

13. Emballage (1) selon l'une ou plusieurs des revendications précédentes, **caractérisé en ce que** lesdits deuxièmes moyens de connexion (13) comprennent au moins une deuxième barrette, formée dans ledit élément de fermeture (10) ou dans ladite languette (11) et pouvant être insérée avec interférence dans un deuxième trou correspondant, qui est formé respectivement dans ladite languette (14) ou dans ledit élément de fermeture (10).

14. Emballage (1) selon l'une ou plusieurs des revendications précédentes, **caractérisé en ce que** ledit élément de fermeture (10) comprend au moins une aile (17), dans laquelle sont prévus lesdits deuxièmes moyens de connexion (13) et qui est adaptée pour être superposée sur ladite languette (11).

15. Emballage (1) selon l'une ou plusieurs des revendications précédentes, **caractérisé en ce qu'**au moins un parmi lesdits premiers moyens de connexion (5) et lesdits deuxièmes moyens de connexion (13) comprend des rivets, des soudures par ultrasons, des soudures par thermocollage ou des liaisons adhésives, formés respectivement entre ledit conteneur (4) et ledit élément substantiellement plat (2) et entre ledit élément de fermeture (10) et ladite languette (11).

16. Emballage (1) selon l'une ou plusieurs des revendications précédentes, **caractérisé en ce que** ledit conteneur (4) comprend un corps de confinement, qui est fermé au fond et s'étend en un col, à l'extrémité supérieure duquel est formée ladite ouverture de distribution (9).

17. Emballage (1) selon l'une ou plusieurs des revendications précédentes, **caractérisé en ce que** l'élément substantiellement plat (2) comprend un moyen destiné à l'engagement avec un élément de support.

18. Emballage (1) selon l'une ou plusieurs des revendications précédentes, **caractérisé en ce que** le moyen d'engagement comprend une fente.
